# DEMANDE DE BREVET EUROPEEN

(11) **EP 4 372 865 A1**
(43) Date de publication de la demande: **22.05.2024**
(21) Numéro de dépôt: 22208379.2
(22) Date de dépôt: 18.11.2022
(51) Int. Cl.: H01M 10/42, H01M 10/48, H01M 10/613, H01M 10/643, H01M 10/653, H01M 10/6556, H01M 50/213, H01M 50/218, H01M 50/224, H01M 50/267, H01M 50/269, H01M 50/284, H01M 50/503, H01M 50/514, H01M 50/519, H01M 50/569, H01M 50/583, H01M 50/559

(54) **ASSEMBLAGE SIMPLE ET MODULABLE DE CELLULES DE BATTERIE UTILISANT DES CARTES DE CIRCUITS IMPRIMES**

(71) Demandeur: John Cockerill Defense SA, 4431 Ans (BE)
(72) Inventeur: Maxime, JAVAUX, 4031 Angleur (BE); TITS, Ronny, 3770 Riemst (BE)
(74) Mandataire: AWA Benelux

(57) **Abrégé**

La présente invention se rapporte à un bloc-batterie rechargeable (10) comprenant une pluralité de cellules de batterie (1), une structure mécanique (3A, 3B) de support des cellules de batterie (1), au moins une carte de circuit imprimé (2) pour l'interconnexion électrique des cellules de batterie (1) disposée sur ladite surface supérieure ou ladite surface inférieure, ou les deux, des moyens d'interconnexion électrique (4, 4', 5) par contact et sans soudure entre les cellules de batterie (1) et les cartes de circuit imprimé (2), caractérisé en ce que la structure mécanique comprend une plaque inférieure (3A) et une plaque supérieure (3B), toutes deux munies de logements (20) en alignement correspondant destinés à accueillir et localiser sans collage respectivement une première extrémité des cellules de batterie (1) et une seconde extrémité des cellules de batterie (1) et en ce que les cartes de circuit imprimé (2) sont standardisées, de sorte que le nombre de cellules de batterie (1) et de cartes de circuit imprimé (2) puisse être rapidement adapté en vue de rendre évolutives ou extensibles la capacité et la tension totales du bloc-batterie (10).

## Description

### Objet de l'invention

La présente invention relève du domaine du stockage d'énergie électrique dans des batteries. L'invention se rapporte plus particulièrement à la conception de blocs-batterie comprenant un nombre relativement élevé de cellules de batterie de petite taille. Les batteries concernées selon l'invention ne doivent pas avoir de contrainte de charge extrêmement rapide, et donc de contrainte thermique élevée.

### Arrière-plan technologique et état de la technique

Actuellement, les cellules unitaires qui constituent les éléments de base d'une batterie sont généralement soudées entre elles ou connectées entre elles par des plaques métalliques vissées. Le soudage implique que des cellules, notamment des cellules défectueuses, ne peuvent pas être retirées facilement de manière individuelle du bloc-batterie (*battery pack*) pour réaliser une maintenance ou pour du recyclage. Pour éviter que les cellules ne soient solidarisées entre elles uniquement par des soudures, l'usage de colle est également très commun, ce qui permet de stabiliser les cellules et de les protéger contre les vibrations.

La protection et l'intégrité bas niveau (qui donc ne concerne pas le BMS - *battery management system*) de la batterie est souvent réalisée grâce à un petit fil soudé entre la tête de chaque cellule unitaire et une barre bus afin de faire office de fusible en cas de disfonctionnement de la cellule unitaire concernée. Le fusible devant être spécifiquement dimensionné pour correspondre aux caractéristiques électriques des cellules unitaires, tout l'assemblage est impacté si une cellule unitaire standard, mécaniquement identique mais électriquement différente, est utilisée.

Dans le cas d'un fusible filaire, il y a l'inconvénient que ce fusible, une fois brûlé ou cassé, provoque un court-circuit sur une des cellules du bloc-batterie ou que des particules de métal soient libérées dans le bloc-batterie. Lorsque le fusible est intégré à une carte de circuit imprimé (voir ci-dessous), il conserve au contraire son intégrité physique en cas de destruction.

Selon l'état de la technique connu, pour résumer, un bloc-batterie se présente donc principalement sous la forme d'un assemblage via soudure par point directement sur les cellules ou bien via soudure d'une tôle et/ou d'un fil fusible s'il y a un fusible prévu. Pour assurer l'intégrité mécanique du bloc-batterie, différentes colles sont généralement utilisées pour coller les cellules entre elles.

L'approche actuelle présente le grand défaut de n'offrir que des possibilités insuffisantes en termes de maintenabilité, de recyclage et de flexibilité puisqu'il est extrêmement difficile, voire impossible, de désouder et d'enlever la colle sans abîmer le bloc-batterie.

Dans la technique actuelle, un nouveau design complet est à réaliser chaque fois que l'on créer un nouveau bloc-batterie, par manque de flexibilité. La maintenance est quasi impossible et le recyclage est difficile.

Le document US11302981 B2 divulgue un bloc-batterie comprenant une pluralité de cellules de batterie, chaque cellule de batterie ayant une électrode positive et une électrode négative sur une surface supérieure de la cellule de batterie, les cellules de batterie étant disposées dans une première direction et dans une deuxième direction traversant la première direction; un module de circuit de protection, le module de circuit de protection comprenant une carte de circuit imprimé (PCB) disposée sur les cellules de la batterie, et une pluralité de languettes conductrices sur la carte de circuit imprimé permettant de relier électriquement les cellules de la batterie; et un boîtier accueillant les cellules de la batterie et le module de circuit de protection; dans lequel chacune des languettes conductrices comprend un connecteur de substrat connecté à la carte de circuit imprimé, un connecteur de cellule connecté électriquement à une cellule de batterie et une liaison fusible s'étendant à partir du connecteur de substrat et ayant une largeur inférieure à celle du connecteur de substrat.

Le document US10720616B2 divulgue un bloc-batterie qui comprend : une pluralité de cellules de batterie; un substrat de carte de circuit imprimé (PCB) connecté électriquement à la pluralité des cellules de batterie et comprenant une première et une seconde surfaces opposées l'une à l'autre; et des première et seconde languettes d'électrode reliant électriquement chacune des cellules de batterie et le substrat du PCB et respectivement connectées à des tampons conducteurs qui ont des polarités différentes et sont situés sur la première surface du substrat du PCB. Le bloc-batterie a une structure améliorée pour une connexion électrique facile des cellules de la batterie.

Le document US20160329606A1 divulgue un bloc-batterie ayant un boîtier qui comprend des zones de logement pour les cellules de batterie situées entre les cartes de circuits imprimés (PCB). Chaque PCB a des ouvertures qui correspondent aux zones de logement respectives. Le bloc-batterie a également des pattes connectées aux cellules de la batterie à travers les ouvertures dans les PCB. Un système de gestion de batterie (BMS) se trouve sur une surface latérale du boîtier, dans lequel les cartes PCB comprennent des parties de motif et dans lequel : les premières extrémités des parties de motif du premier PCB sont connectées à celles respectives des pattes correspondant au premier PCB et les deuxièmes extrémités des parties de motif du premier PCB sont au niveau d'une première partie de collecte de motif sur la surface latérale du boîtier, et les premières extrémités des parties de motif du deuxième PCB sont connectées à celles respectives des pattes correspondant au deuxième PCB et les deuxièmes extrémités des parties de motif du deuxième PCB sont au niveau d'une deuxième partie de collecte de motif sur la surface latérale du boîtier.

Le document US10559804B2 divulgue un bloc-batterie comprenant un premier et un second groupes de cellules comprenant chacun une ou plusieurs cellules, une carte de circuit imprimé connectée électriquement au premier et au second groupes de cellules et un connecteur fourni dans la carte de circuit imprimé et comprenant une pluralité de bornes de connexion. Les bornes de connexion comprennent des premières et deuxièmes bornes de connexion respectivement connectées électriquement aux premières et aux deuxièmes électrodes du premier groupe de cellules. Les bornes de connexion comprennent des premières et deuxièmes bornes de connexion respectivement connectées électriquement aux premières et aux deuxièmes électrodes du deuxième groupe de cellules. Les premières et troisièmes bornes de connexion sont en contact amovible les unes avec les autres, les deuxièmes et quatrièmes bornes de connexion sont en contact amovible les unes avec les autres. Selon certains modes de réalisation, il est possible de simplement libérer physiquement une connexion parallèle d'une pluralité de cellules ou d'une pluralité de groupes de cellules.

Plusieurs problèmes liés à cette technologie se posent et doivent être résolus, notamment :
- le mode de connexion de chaque cellule unitaire avec la carte PCB ;
- la fixation mécanique des cellules compatible avec un démontage du bloc et une bonne tenue en vibration ;
- la connexion facile du bloc-batterie avec le système de contrôle de batterie (BMS) ;
- la capacité (liée au BMS) à diagnostiquer l'état des cellules dans un contexte de maintenance ;
- la réduction de taille nécessaire pour la connexion entre les cellules et les cartes PCBs du bloc ;
- la réduction de l'espace nécessaire pour la fixation des cartes PCB du bloc.

### Définitions

La capacité d'une batterie est la quantité de courant fourni en continu par la batterie. Elle s'exprime en ampère-heure (Ah). Si on multiplie la capacité d'une batterie par sa tension (nominale) en volt (V), on obtient l'énergie de la batterie (en watt-heure, Wh). Pour caractériser une batterie, il faut donc connaître sa capacité et sa tension.

On appelle système de gestion de batterie (en anglais : BMS pour *battery management system*) un système électronique de sécurité intelligent, en particulier destiné à la gestion des blocs-batterie comportant des cellules en série et en parallèle, capable d'assurer une protection principalement contre les surtensions, les sous-tensions et les surintensités. Outre les fonctions de base, le BMS peut assurer des fonctions complémentaires de contrôle et gestion telles qu'un équilibrage des éléments, un paramétrage personnalisé, via smartphone et connexion bluetooth, etc.

### Buts de l'invention

La présente invention vise à fournir une solution qui ne nécessite pas de soudure sur les cellules unitaires, ni utilisation de colle pour solidariser les cellules entre elles, ce qui permet une conception et une réalisation aisées de nouvelles batteries de capacité et/ou de tension différentes et variables les unes des autres et finalement qui améliore la maintenabilité du bloc-batterie ainsi que son recyclage.

Ce type de bloc-batterie doit pouvoir être utilisé dans/comme n'importe quel type de bloc intégrant des cellules unitaires de plus petite taille.

### Principaux éléments caractéristiques de l'invention

La présente invention se rapporte à un bloc-batterie rechargeable comprenant :
- une pluralité de cellules de batterie, chaque cellule de batterie ayant une borne positive et une borne négative, une surface supérieure et une surface inférieure, lesdites bornes positive et négative étant disposées d'un même côté sur la surface supérieure ou inférieure ou alternativement disposées sur la surface supérieure et la surface inférieure, la pluralité de cellules de batterie étant disposée dans une première direction et dans une seconde direction, orthogonale à la première direction ;
- une structure mécanique de support des cellules de batterie ;
- au moins une carte de circuit imprimé pour l'interconnexion électrique des cellules de batterie disposée sur ladite surface supérieure ou ladite surface inférieure, ou les deux ;
- des moyens d'interconnexion électrique par contact et sans soudure entre les cellules de batterie et les cartes de circuit imprimé permettant une connexion des cellules de batterie n série et/ou en parallèle ;
caractérisé en ce que la structure mécanique comprend une plaque inférieure et une plaque supérieure, toutes deux munies de logements en alignement correspondant destinés à accueillir et localiser sans collage respectivement une première extrémité des cellules de batterie et une seconde extrémité des cellules de batterie et en ce que les cartes de circuit imprimé sont standardisées, de sorte que le nombre de cellules de batterie et de cartes de circuit imprimé puisse être rapidement adapté en vue de rendre évolutives ou extensibles la capacité et la tension totales du bloc-batterie.

Selon des formes d'exécution préférées de l'invention, le bloc-batterie rechargeable comprend en outre au moins une des caractéristiques suivantes ou une combinaison appropriée de plusieurs d'entre elles :
- les cartes de circuit imprimé ont une taille identique ou une taille variable en fonction du nombre de connexions de cellules qu'elles possèdent ;
- les cartes de circuit imprimé possèdent des trous traversants pour la fixation au moyen de vis ou rivets des cartes de circuit imprimé à la plaque inférieure et à la plaque supérieure de la structure mécanique via des trous d'alignement correspondant aux trous traversants des cartes de circuit imprimé, dans lesdites plaques, lesdits trous correspondants se trouvant entre lesdits logements dans la plaque inférieure et la plaque supérieure ;
- les cartes de circuit imprimé ont un profil ou côté latéral non linéaire, ondulé, de sorte que deux cartes de circuit imprimé adjacentes ont des profils ondulés complémentaires et, dans l'assemblage final du bloc-batterie, deux trous adjacents sur une ligne droite longeant la jonction des deux cartes de circuit imprimé sont alternativement positionnés sur l'une et l'autre carte ;

- les logements dans la plaque inférieure et la plaque supérieure sont de forme générale cylindrique et possèdent un rebord respectivement bas et haut pour permettre la localisation et le blocage de la cellule de batterie correspondante à chacune de ses extrémités ;
- les structures d'accueil sont réalisées dans un matériau isolant, par exemple en plastique ou dans un matériau conducteur tel qu'un métal ;
- dans le cas où au moins une des structures d'accueil est réalisée dans un matériau conducteur, les cellules de batterie, hormis leurs connexions, sont emballées en tout ou en partie dans un film isolant, le film isolant s'arrêtant le cas échéant avant une extrémité de la cellule afin de permettre la connexion de celle-ci sur sa périphérie ;
- les structures d'accueil sont pourvues d'ailettes sur leur tranche pour permettre un meilleur transfert de chaleur vers l'extérieur ;
- les moyens d'interconnexion électrique par contact et sans soudure comprennent des connecteurs ou contacts à ressort ;
- les cartes de circuit imprimé sont des barres-bus ;
- le bloc-batterie rechargeable comprend un système de gestion de batterie intégré sur l'une des cartes de circuit imprimé servant de barre-bus ou connecté à l'ensemble des cartes de circuit imprimé via un connecteur de bordure de carte ;
- le système de gestion de batterie intégré est configuré pour connaître le statut de sous-groupes de cellules ;
- le système de gestion de batterie intégré comprend un circuit dédié pour identifier une cellule défectueuse ;
- le système de gestion de batterie intégré est configuré pour adapter les paramètres de charge du bloc-batterie ou de chaque sous-groupe de cellules en cas de détection d'une ou plusieurs cellules unitaires défectueuses ;
- un fusible de caractéristiques standardisées est associé à chaque cellule, ou est sous forme d'une lamelle incorporée au substrat de la carte de circuit imprimé ou soudée sur celui-ci, le changement de fusible dans ce dernier cas requérant le changement de la carte complète.

### Brève description des figures

La figure 1 représente une forme d'exécution pour la connexion entre les cellules et les cartes PCB dans un bloc-batterie selon l'invention, avec des connexions électriques positionnées d'un seul côté d'une cellule unitaire, au niveau d'une carte PCB se trouvant de ce même côté, selon une vue en perspective (à gauche) et deux vues en élévation à 90° l'une de l'autre (à droite).
La figure 2 représente une autre forme d'exécution pour la connexion entre les cellules et les cartes PCB dans un bloc-batterie selon l'invention, avec des connexions électriques positionnées des deux côtés d'une cellule unitaire, au niveau de deux cartes PCB se trouvant respectivement de chaque côté de la cellule, selon une vue en perspective (à gauche) et une vue en élévation (à droite).
La figure 3 montre selon une vue en plan le gain de place obtenu dans la configuration selon une forme d'exécution de l'invention grâce à un profil particulier de cartes PCB permettant un emboîtement de celles-ci.
La figure 4 montre un exemple d'exécution d'un bloc-batterie complet dont la capacité totale est définie par 6 cellules et la tension totale est définie par 13 cellules, ainsi que sa structure mécanique et en utilisant des cartes PCB des deux côtés du bloc.
Les figures 5A à 5D montrent les différentes étapes d'assemblage d'un bloc-batterie selon l'exemple d'exécution de la figure 4, avec une approche de bas en haut (*bottom-up*).
La figure 6 montre un exemple d'exécution selon l'invention d'une carte PCB simple intégrant un fusible de taille standard par cellule et un connecteur standard destiné à la connexion d'un système de contrôle de batterie BMS.

### Description de formes d'exécution préférées de l'invention

La présente invention propose une solution d'assemblage innovante pour des cellules de batterie, unitaires et de petite taille.

L'innovation de la solution réside dans sa flexibilité et sa rapidité à pouvoir mettre en œuvre des batteries de capacité et de tension différentes tout en respectant des normes de sécurité élevées en partant des mêmes cellules unitaires standard. La solution offre également des avantages notables en matière de recyclage des cellules et de maintenance des batteries pour permettre une durée de vie accrue des blocs-batterie.

Grâce à la solution d'assemblage selon l'invention, les cellules ne seront plus soudées ni collées et le fusible individuel éventuel sera un fusible de taille et de caractéristiques standard, de préférence un fusible cartouche amovible fixé au PCB sur un porte-fusible, pouvant être remplacé le cas échéant par un autre de la même taille mais avec des caractéristiques correspondantes aux cellules unitaires utilisées.

On peut utiliser selon l'invention des fusibles de caractéristiques standardisées qui se montent sur une carte de circuit imprimé (PCB). Ces fusibles ont des spécifications complètes et existent pour différents niveaux de courant permettant de faire correspondre parfaitement le fusible avec la cellule unitaire utilisée. Alternativement le fusible peut également se présenter sous forme d'une lamelle incorporée au substrat du PCB ou soudée sur celui-ci, mais dans ce cas le changement de fusible va alors requérir le changement de la carte PCB complète.

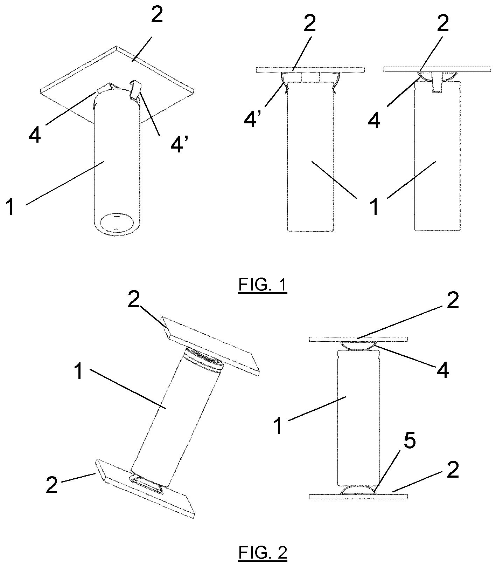

La FIG. 1 montre la connexion spécifique d'une cellule 1 avec une seule carte PCB 2, les connexions de polarité différente 4, 4' étant localisées du même côté de la cellule 1. La FIG. 2 montre la connexion spécifique d'une cellule 1 avec deux cartes PCB 2, une de ces cartes 2 étant située à chacun des côtés de la cellule 1. Dans ce cas, il y a une connexion 4, 5 de chaque côté de la cellule 1, les deux connexions étant de polarité opposée. Comme il n'est pas question, dans le cadre de la présente invention, de souder les connexions aux pôles des cellules individuelles de batterie, on utilisera avantageusement tout type de connecteur rapide par contact connu de l'homme de métier, par exemple des contacts à ressort. Le contact sera effectué lorsque les cartes PCB seront solidarisées à la structure mécanique du bloc-batterie (voir ci-après).

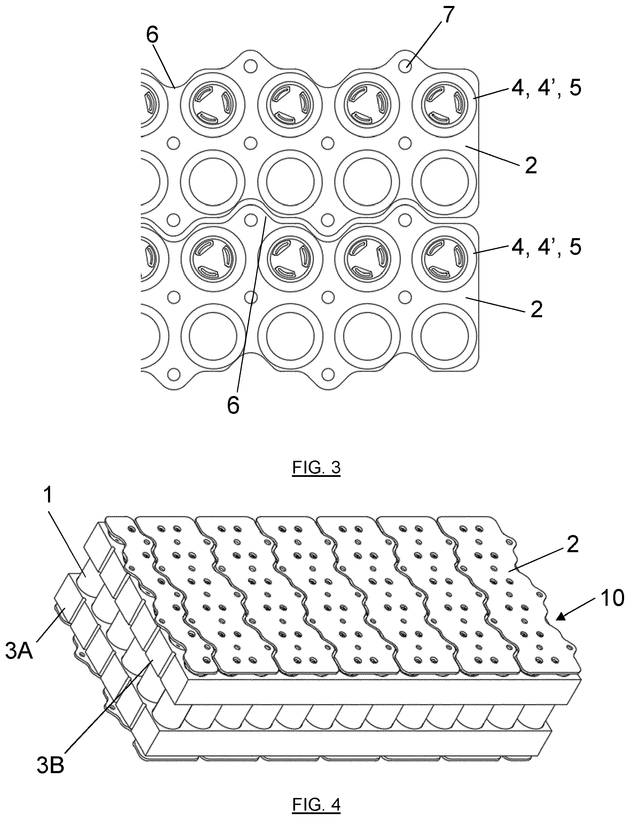

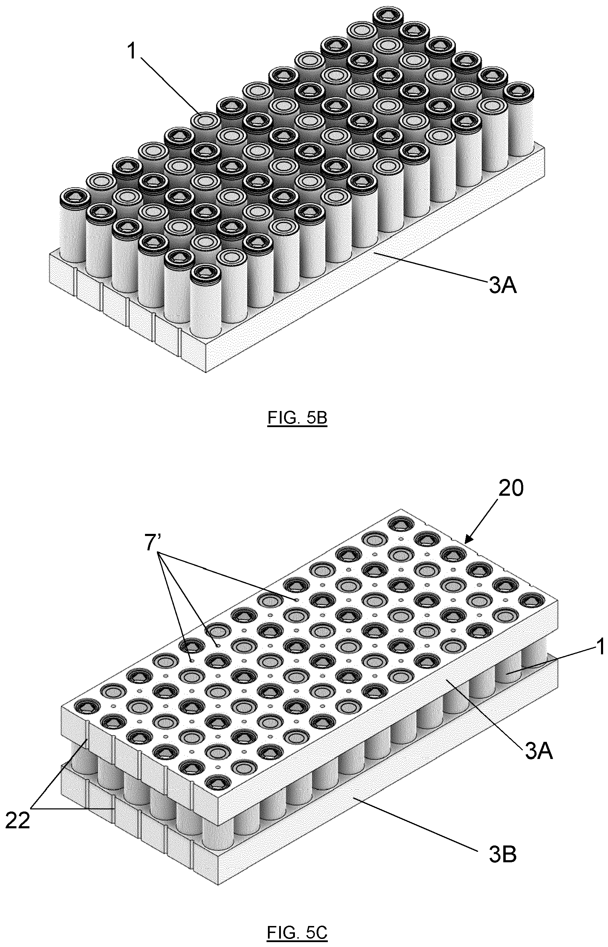

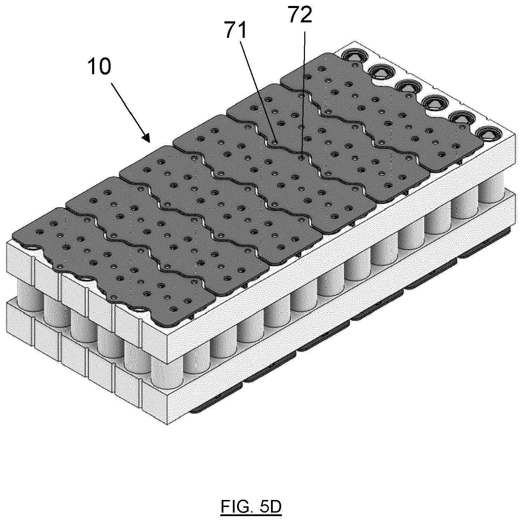

Comme le montre la FIG. 3, une caractéristique de l'invention est de proposer des cartes PCB 2 ayant un profil (côté) latéral très particulier 6, ondulé et non linéaire, particulièrement utile lorsque plusieurs cartes identiques 2 sont adjacentes dans l'assemblage selon ce côté latéral 6, ce qui procure l'avantage de réduire le volume ou la surface nécessaire pour le bloc-batterie. Les cartes PCB 2 sont pourvues de trous traversants 7 pour pouvoir visser ces cartes à la structure mécanique 3A, 3B du bloc-batterie (FIG. 4). Puisque ces fixations doivent nécessairement se trouver en dehors des cellules et afin de ne pas augmenter la distance entre deux rangées de cellules à l'endroit où deux cartes PCB sont accolées (ou adjacentes ou rapportées), le profil ondulé permet que deux trous adjacents 71, 72 dans l'assemblage final soient positionnés sur deux cartes 2 différentes (FIG. 5D).

La FIG. 4 montre un bloc-batterie complètement assemblé selon une forme d'exécution de l'invention.

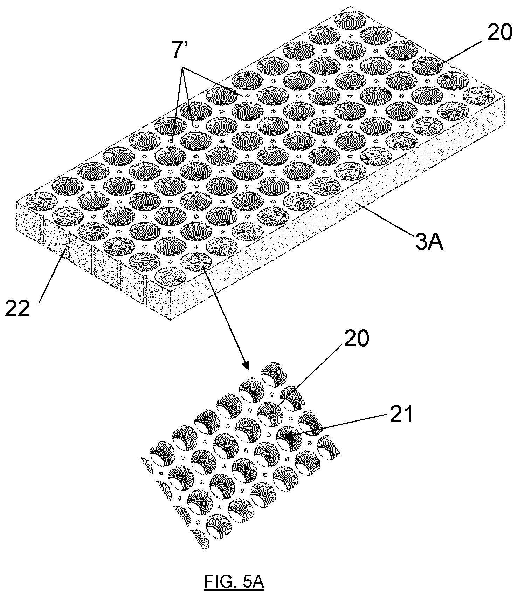

Comme représenté sur les FIG. 5A à 5D, l'assemblage se fait avantageusement selon une approche de bas en haut (*bottom-up*). Les cellules individuelles 1 sont d'abord solidarisées sans colle à une première structure d'accueil mécanique 3A. Cette structure 3A a la forme d'une plaque comportant des rangées espacées de logements 20, de forme générale cylindrique (pour accueillir des piles « crayon »). Les cellules sont disposées dans ces logements 20 à une extrémité et bloquées par un rebord 21 à cette même extrémité (FIG. 5A ; détail).On dispose sur les cellules, à leur autre extrémité, une seconde structure d'accueil 3B, pourvue de logements 20 identiques avec également un rebord (non représenté) pour bloquer les cellules à leur autre extrémité. Les deux structures d'accueil 3A, 3B sont pourvues d'orifices 7 équidistants, se trouvant entre les logements de cellules et se correspondant sur les deux plaques, afin de pouvoir venir y fixer, de préférence visser, les différentes cartes PCB 2 qui vont refermer le bloc-batterie, sur un ou les deux côtés (comme sur la FIG. 4) de celui-ci. A cette fin, les trous traversants 7 pratiqués dans les cartes PCB 2 permettent de localiser avec précision ces cartes par rapport aux structures d'accueil 3A, 3B. Ce n'est qu'une fois que le bloc-batterie 10 est assemblé que les connecteurs des cartes PCB 2 assurent effectivement la connexion électrique des éléments de pile entre eux, en parallèle ou en série.

Les structures d'accueil mécanique 3A, 3B peut être réalisées dans un matériau isolant, par exemple en plastique ou dans un matériau conducteur tel qu'un métal, ce qui fournit un meilleur refroidissement. Dans ce dernier cas, il y a cependant une contrainte d'isolation parfaite des cellules de batterie par rapport au support mécanique (utilisation de cellules «emballées» dans un film isolant). Pour l'évacuation de la chaleur, les structures d'accueil peuvent également être pourvues d'ailettes ou encore de rainures 22 permettant la circulation d'air.

Les cartes PCB ont avantageusement comme fonction celle d'intégrer une protection basique des cellules unitaires, telle qu'un fusible ainsi que d'autres fonctions potentielles telles qu'un BMS. Elles facilitent également le démontage de la batterie via l'utilisation de connecteurs non soudés. Cette configuration permet bien sûr l'utilisation de cartes PCB soit d'un seul côté des cellules pour une connexion électrique positive et négative, soit des deux côtés pour une connexion de polarité unique (et opposée) de chaque côté des cellules.

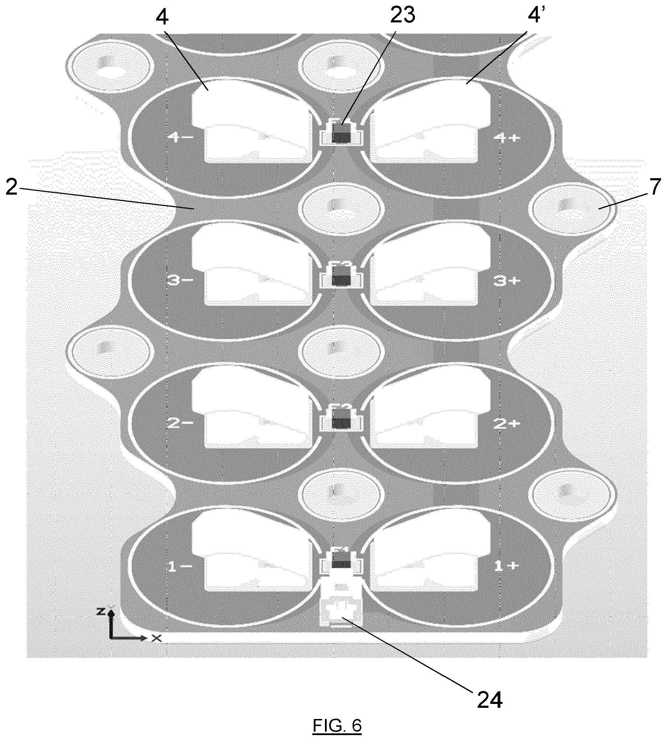

La FIG. 6 montre un exemple de carte PCB 2 avec quatre paires de connecteurs, correspondant respectivement à quatre cellules 1, la carte 2 présentant un fusible incorporé 23 par cellule, ainsi qu'un connecteur 24 pour le BMS.

Les avantages particuliers liés à l'invention sont les suivants :
- l'absence de soudures facilite le recyclage et rend la maintenance possible dans le cas où une ou plusieurs cellules unitaires sont défectueuses ;
- la fixation des cellules sans colle dans les supports purement mécaniques ce qui rend aussi la maintenance possible ;
- l'utilisation de cartes PCB pour la connexion des cellules au lieu de tôles soudées permet la flexibilité des designs et rend notamment possible l'intégration directe d'un BMS ou l'intégration d'autres circuits électroniques à la batterie (pour réaliser la maintenance ou pour faire une détection de cellules mortes par exemple) ;
- grâce à l'utilisation de cartes PCB, le contrôle de la batterie peut être réalisé jusqu'au niveau de « set » ou sous-ensemble (niveau avec 6 cellules unitaires par exemple) avec la possibilité de déterminer le statut de chaque « set » ;
- le statut de chaque « set » étant connu, le système de gestion de batterie (BMS) pourra être conçu pour adapter de manière intelligente les paramètres de charge afin d'éviter d'endommager les cellules ;
- la possibilité d'intégrer le BMS au bloc-batterie sur l'une des cartes de barres-bus ou sur le côté du pack de batterie via des connecteurs de bordure de carte (*edge connector*), connus en soi de l'homme de métier ;
- l'utilisation de fusibles standards, ce qui procure une flexibilité dans le choix des cellules et une indépendance de la ligne de production par rapport aux cellules particulières choisies dans chaque cas de figure ;
- lorsque le fusible est intégré à la carte PCB, il conserve son intégrité physique même une fois ouvert électriquement (brûlé, cassé), au contraire d'un simple fil qui peut laisser des résidus dans le bloc-batterie ;
- l'utilisation de cartes PCB pour la connexion entre les cellules permet de réduire les dangers de court-circuit durant l'assemblage puisque les éléments conducteurs sont isolés de la surface externe des PCBs et toutes les connexions sont alors établies en même temps. Par contre, dans le cas des barres-bus, il est plus facile d'établir un court-circuit lors de l'assemblage qu'avec un système PCB ;
- les connecteurs de sortie de la batterie ainsi que les connecteurs pour un BMS non-intégré au PCB peuvent directement faire partie du PCB ;
- comme l'assemblage final ne comprend pas d'étape de soudure mais uniquement des étapes de montage mécanique, il n'y a donc pas de nécessité d'avoir un personnel spécifiquement qualifié pour le soudage de cellules ou d'avoir une machine dédiée. On évite ainsi le risque d'endommagement des cellules au montage par soudage.

Les inconvénients de l'invention sont uniquement liés à certains coûts plus élevés (mais qui sont largement compensés par les avantages technologiques et opérationnels) :
- l'utilisation d'une carte PCB au lieu d'une tôle soudée engendre un coût plus élevé par rapport à une soudure directe pour les gros blocs-batterie (typiquement avec plus de 100 cellules par bloc) ;
- l'utilisation de fusibles standards engendre un coût plus élevé par rapport à un simple fil (ou une simple languette) soudé(e) lorsque le volume de production est important.

Le bloc-batterie selon la présente invention est particulièrement adapté pour des applications de véhicule militaire ou des applications industrielles, dans lesquelles, contrairement aux véhicules civils, la contrainte de vitesse de charge et donc la contrainte thermique correspondante peut ne pas être très importante.

On peut également envisager des applications de stockage d'énergie telles que des batteries domestiques (*power wall*) avec de plus grosses cellules et constituant un mix de sous-modules évolutifs et extensibles selon l'invention et de sous-modules soudés, pour autant que le degré de maintenabilité de l'ensemble soit jugé suffisant.

### Liste des symboles de référence

- 1: cellule de batterie
- 2: carte de circuit imprimé
- 3A, 3B: structure mécanique de support
- 4, 4': connecteur
- 5: connecteur
- 6: profil ondulé de carte de circuit imprimé
- 7, 7': trou traversant (resp. non traversant)
- 10: bloc-batterie rechargeable
- 20: logement dans plaque de support mécanique
- 21: rebord de logement
- 22: rainure
- 23: fusible
- 24: connecteur de bordure de carte
- 71, 72: trous adjacents dans assemblage final

## Revendications

1. Un bloc-batterie rechargeable (10) comprenant :
- une pluralité de cellules de batterie (1), chaque cellule de batterie (1) ayant une borne positive et une borne négative, une surface supérieure et une surface inférieure, lesdites bornes positive et négative étant disposées d'un même côté sur la surface supérieure ou inférieure ou alternativement disposées sur la surface supérieure et la surface inférieure, la pluralité de cellules de batterie (1) étant disposée dans une première direction et dans une seconde direction, orthogonale à la première direction ;
- une structure mécanique (3A, 3B) de support des cellules de batterie (1) ;
- au moins une carte de circuit imprimé (2) pour l'interconnexion électrique des cellules de batterie (1) disposée sur ladite surface supérieure ou ladite surface inférieure, ou les deux ;
- des moyens d'interconnexion électrique (4, 4', 5) par contact et sans soudure entre les cellules de batterie (1) et les cartes de circuit imprimé (2) permettant une connexion des cellules de batterie (1) en série et/ou en parallèle ;
**caractérisé en ce que** la structure mécanique comprend une plaque inférieure (3A) et une plaque supérieure (3B), toutes deux munies de logements (20) en alignement correspondant destinés à accueillir et localiser sans collage respectivement une première extrémité des cellules de batterie (1) et une seconde extrémité des cellules de batterie (1) et **en ce que** les cartes de circuit imprimé (2) sont standardisées, de sorte que le nombre de cellules de batterie (1) et de cartes de circuit imprimé (2) puisse être rapidement adapté en vue de rendre évolutives ou extensibles la capacité et la tension totales du bloc-batterie (10).

2. Le bloc-batterie rechargeable (10) selon la revendication 1, **caractérisé en ce que** les cartes de circuit imprimé (2) ont une taille identique ou une taille variable en fonction du nombre de connexions de cellules (1) qu'elles possèdent.

3. Le bloc-batterie rechargeable (10) selon la revendication 1, **caractérisé en ce que** les cartes de circuit imprimé (2) possèdent des trous traversants (7) pour la fixation au moyen de vis ou rivets des cartes de circuit imprimé (2) à la plaque inférieure (3A) et à la plaque supérieure (3B) de la structure mécanique via des trous (7') d'alignement correspondant aux trous traversants (7) des cartes de circuit imprimé (2), dans lesdites plaques (3A, 3B), lesdits trous correspondants (7') se trouvant entre lesdits logements (20) dans la plaque inférieure (3A) et la plaque supérieure (3B).

4. Le bloc-batterie rechargeable (10) selon la revendication 1, **caractérisé en ce que** les cartes de circuit imprimé (2) ont un profil ou côté latéral (6) non linéaire, ondulé, de sorte que deux cartes de circuit imprimé (2) adjacentes ont des profils ondulés (6) complémentaires et **en ce que**, dans l'assemblage final du bloc-batterie (10), deux trous (71, 72) adjacents sur une ligne droite longeant la jonction des deux cartes de circuit imprimé (2) sont alternativement positionnés sur l'une et l'autre carte (2).

5. Le bloc-batterie rechargeable (10) selon la revendication 1, **caractérisé en ce que** les logements (20) dans la plaque inférieure (3A) et la plaque supérieure (3B) sont de forme générale cylindrique et possèdent un rebord (21) respectivement bas et haut pour permettre la localisation et le blocage de la cellule de batterie (1) correspondante à chacune de ses extrémités.

6. Le bloc-batterie rechargeable (10) selon la revendication 1, **caractérisé en ce que** les structures d'accueil (3A, 3B) sont réalisées dans un matériau isolant, par exemple en plastique ou dans un matériau conducteur tel qu'un métal.

7. Le bloc-batterie rechargeable (10) selon la revendication 6, **caractérisé en ce que**, dans le cas où au moins une des structures d'accueil (3A, 3B) est réalisée dans un matériau conducteur, les cellules de batterie, hormis leurs connexions, sont emballées en tout ou en partie dans un film isolant, le film isolant s'arrêtant le cas échéant avant une extrémité de la cellule afin de permettre la connexion de celle-ci sur sa périphérie.

8. Le bloc-batterie rechargeable (10) selon la revendication 1, **caractérisé en ce que** les structures d'accueil (3A, 3B) sont pourvues d'ailettes sur leur tranche pour permettre un meilleur transfert de chaleur vers l'extérieur.

9. Le bloc-batterie rechargeable (10) selon la revendication 1, **caractérisé en ce que** les moyens d'interconnexion électrique (4, 4', 5) par contact et sans soudure comprennent des connecteurs ou contacts à ressort.

10. Le bloc-batterie rechargeable (10) selon la revendication 1, **caractérisé en ce que** les cartes de circuit imprimé (2) sont des barres-bus.

11. Le bloc-batterie rechargeable (10) selon la revendication 10, **caractérisé en ce qu'**il comprend un système de gestion de batterie intégré sur l'une des cartes de circuit imprimé (2) servant de barre-bus ou connecté à l'ensemble des cartes de circuit imprimé (2) via un connecteur de bordure de carte (24).

12. Le bloc-batterie rechargeable (10) selon la revendication 11, **caractérisé en ce que** le système de gestion de batterie intégré est configuré pour connaître le statut de sous-groupes de cellules (1).

13. Le bloc-batterie rechargeable (10) selon la revendication 11, **caractérisé en ce que** le système de gestion de batterie intégré comprend un circuit dédié pour identifier une cellule (1) défectueuse.

14. Le bloc-batterie rechargeable (10) selon la revendication 11, **caractérisé en ce que** le système de gestion de batterie intégré est configuré pour adapter les paramètres de charge du bloc-batterie (10) ou de chaque sous-groupe de cellules (1) en cas de détection d'une ou plusieurs cellules unitaires (1) défectueuses.

15. Le bloc-batterie rechargeable (10) selon la revendication 1, **caractérisé en ce qu'**un fusible (23) de caractéristiques standardisées est associé à chaque cellule (1), ou est sous forme d'une lamelle incorporée au substrat de la carte de circuit imprimé (2) ou soudée sur celui-ci, le changement de fusible (23) dans ce dernier cas requérant le changement de la carte (2) complète.
